# EUROPEAN PATENT APPLICATION

(11) **EP 2 927 848 A1**
(43) Date of publication of application: **07.10.2015**
(21) Application number: 14305490.6
(22) Date of filing: 03.04.2014
(51) Int. Cl.: G06Q 10/02

(54) **Computer system and method for selling travel services**

(71) Applicant: Amadeus S.A.S., 06410 Biot (FR)
(72) Inventor: Hauviller, Nicolas, 06560 Valbonne (FR); Montegut, Francois, 06000 Nice (FR); Daniello, Rudy, 06200 Nice (FR)
(74) Representative: Samson & Partner Patentanwälte mbB

(57) **Abstract**

A computer system (1) for selling travel services by a travel seller to a travel client, comprising a travel seller screen (3) for showing travel information from the travel database system (2) to the travel seller and a screen visualization module (4, 24) for visualizing travel information from the travel database system (2) onto the travel seller screen (3), the computer system (1) further comprising a travel seller selection interface module (5) allowing the travel seller to select client travel information from the travel database system (2) and a travel client screen (6) different from the travel seller screen (3) for showing travel information from the travel database system (2) to the travel client, the screen visualization module (4, 24) being provided to visualize the selected client travel information from the travel database system (2) onto the travel client screen (6).

## Description

The current invention relates to a computer system for selling travel services according to the preamble of the first claim.

Computer systems for selling travel services, are already very known to the person skilled in the art. Such systems are for example operated by a travel seller, for example a travel agent, trying to sell travel services to a travel client in a face-to-face situation, for example a possible future traveller. The known systems comprise a travel database system comprising travel information, a travel seller screen for showing travel information from the travel database system to the travel seller and a screen visualization module for visualizing travel information from the travel database system onto the travel seller screen. Often the travel seller is retrieving and viewing information for the travel client, more in particular for the travel the travel client is planning. It happens that at certain moments, the travel client desires some input from the travel seller, for example when the travel client needs to decide on certain aspects from his travel, for example when the travel client needs to decide which flight, itinerary, hotel, etc. he wants to book for the planned travel. At such moments in the office of the travel agencies, where the travel seller and the travel client are physically close to each other, it often happens that the travel seller turns his screen towards the travel client so as to present him with travel information, for example the available options, so that the client can make his choice based on the information presented.

In the context of the current invention travel information can be any type of information related to travel, for example, but certainly not limited to, information relating to travel services such as for example type of travel service (for example a flight, a hotel, a car rental, a train, etc.) a set of attributes of the travel services (for example: airline name, flight number, equipment type, price per person, departure date and time, arrival date and time, etc.), etc.

However, the travel information shown on the travel seller screen often is not at all adapted to the travel client and is merely adapted to the travel seller. For example, it often happens that certain information is provided using abbreviations, acronyms, a specific language or specific jargon from the travel industry which are not easily or even not at all understood by a common travel client. Moreover, often the way the travel information is shown on the travel seller screen is not at all adapted at being shown to a client as, for example, the layout is specifically adapted at conveying and/or inputting information to a travel seller as opposed to a travel client. Often, even a command line interface is being used, which is often perceived as commercially very unsuitable to sell travel services to travel clients. In some cases even confidential information, such as for example commissions received for certain travel services, margins, etc., is being shown to the travel client by showing the travel seller screen to the travel client.

Therefore, it is an object of the present invention to provide a computer system which has an improved way of showing travel information to a travel client.

This is achieved according to the present invention by a computer system comprising the technical features of the characterizing portion of the first claim.

Thereto, the computer system further comprises a travel seller selection interface module allowing the travel seller to select client travel information from the travel database system and a travel client screen different from the travel seller screen for showing travel information, preferably the selected client travel information, from the travel database system to the travel client and wherein the screen visualization module is provided to visualize the selected client travel information from the travel database system onto the travel client screen.

According to such computer systems it has been found that the travel seller can avoid having to turn his screen towards the travel client to show him travel information relevant for the travel planned by the travel client. Instead, relevant travel information is now shown to the travel client on a separate screen and can be specifically formatted for that purpose by the screen visualization module. The travel seller selection interface module allows the travel seller to control what the travel client will see on the travel client screen.

For example, when the travel client needs to decide which flight, itinerary, hotel, etc. he wants to book for the planned travel, the travel seller can select client travel information to be shown on the travel client screen such as to show the relevant travel information to the travel client allowing the travel client to make a choice and provide feedback to the travel seller. In addition, the screen visualization module can now format the travel information in a commercially acceptable way.

Although computer systems allowing to share content of a screen already are described, for example in US20060031779A1, such computer systems are not related to the travel industry and are not provided to interact with a travel database system as described in the current application.

Moreover, as a further advantage of the current invention, it is noted that the travel seller and the travel client do no longer need to be physically close to each other and that it is no longer necessary that the seller and the client are in the same travel agency office. Indeed, the travel seller and the travel client can for example communicate over a distance, for example by voice over for example the telephone, or any other way deemed appropriate such as for example by written text such as for example by chatting, SMS, etc., while the travel seller can show certain travel information at the same time on the travel client screen using the travel seller selection interface module. This allows for example that the travel client no longer has to move to the location of the travel agent to obtain the desired travel information.

According to preferred embodiments of the computer system of the current invention, the computer system comprises a travel client selection interface module. Such a travel client selection interface module allows the travel client to provide feedback to the travel seller.

According to more preferred embodiments of the computer system of the current invention, the travel client selection interface module allows the travel client to select further client travel information, for example from the travel database system or from other sources such as for example from websites available on the internet, for example websites such as, but certainly not limited to, for example travel websites such as for example the TRIPADVISOR travel website and/or other websites such as for example photo sharing websites such as for example the FLICKR photo sharing website, etc. The selected and displayed further client travel information preferably is based on a selection of the travel client from the selected client travel information visualized on the travel client screen, for example by the travel client selecting one of several options shown to him on the travel client screen. Furthermore, the screen visualization module is preferably provided to visualize the selected further client travel information from the travel database system. Such a configuration allows the travel client to for example select one of the options provided to him or her by the travel seller such that more information on that information is shown. This way, it for example becomes possible to present travel information of at least one travel service, preferably a plurality of optional travel services, and to show further travel information on demand by the travel client.

According to other more preferred embodiments of the computer system of the current invention, the travel client selection interface module allows, preferably through a client selection module of the travel client selection interface module, the travel client to select a travel service represented by the client travel information from the travel database system, preferably from the selected client travel information visualized on the travel client screen. The travel client selection interface module is provided to transmit the selected travel service to a booking module of the computer system, allowing the travel seller to book the selected travel service. Such a configuration for example allows the travel seller to present the travel client with several options after which the travel client selects the desired option and the relevant information is sent to a booking component making it, for example, possible for a travel seller to book the desired travel service for the travel client. The booking component for example may comprise a shopping box module, making it possible for the travel seller and/or the travel client to select several travel services before making a final decision. Moreover, according to more preferred embodiments of the invention, the content of the shopping box could be presented on the travel client screen on request of the travel client and/or the travel seller.

According to more preferred embodiments of the computer system according to the current invention, the travel seller selection interface module if present is provided to enable or disable the client selection module of the travel client selection interface module. Such a configuration allows the travel seller to enable or disable the possibility that the travel client makes a selection, increasing the control of the travel seller on the information shown to the travel client.

The invention also relates to a method for selling travel services by a travel seller to a travel client, wherein a travel seller screen of a computer system shows travel information from a travel database system of the computer system visualized by a screen visualization module of the computer system to a travel seller. After selection of client travel information from the travel database system of the computer system by the travel seller through a travel seller selection interface module of the computer system, the screen visualization module visualizes the selected client travel information from the travel database system onto a travel client screen separate from the travel seller screen.

According to preferred embodiments of the method of the current invention, the computer system comprises a travel client selection interface module.

According to further preferred embodiments of the method of the current invention, the travel client selects further client travel information from the travel database system, preferably from the selected client travel information visualized on the travel client screen, through the travel client selection interface module. The screen visualization module visualizes the selected further client travel information from the travel database system. The selected and displayed further client travel information preferably is based on a selection of the travel client from the selected client travel information visualized on the travel client screen, for example by the travel client selecting one of several options shown to him on the travel client screen.

According to other further preferred embodiments of the method according to the current invention, the travel client selects a travel service represented by the client travel information from the travel database system, preferably from the selected client travel information visualized on the travel client screen, through the travel client selection interface module. The travel client selection interface module transmits the selected travel service to a booking module of the computer system, for booking of the selected travel service by the travel seller.

The travel seller can be any one of travel agent, a travel management company (TMC), a travel company, for example an airline, a train operating company, a bus operating company, a boat operating company, etc.

The travel client can be any one of a leisure travel client or a business travel client. The leisure travel client can for example be a private person, a group of private persons, an organization organizing a leisure travel for one or more of private persons, etc. The business travel client can be for example a private person making a business travel, a group of private persons making a business travel, an organization, for example a company, organizing a business travel for one or more of private persons and/or one or more companies, etc.

According to preferred embodiments of the invention, the travel client screen 6 is part of a travel client computer and the travel seller screen is part of a different travel seller computer, both connected to the travel database system through a computer network. Such embodiments have been found to allow the travel seller and the travel client to be on physically different locations, while nevertheless the travel agent can provide information, for example interactively, to the travel client, for example by phone, or any other way, for example through chatting, etc., and can show, for example interactively, travel information on the travel client screen. Therefore, such an embodiment allows the travel client to avoid having to move to the location of the travel agent.

The travel client screen could be part of a tablet computer, such as for example the APPLE IPAD, GOOGLE NEXUS, SAMSUNG GALAXY TAB, or part of a wearable computer like a portable computer, such as for example a laptop computer, connected glasses e.g. GOOGLE GLASS, VUZIX M100 or even watches, for example Smart watches e.g. PEEBLE WATCH or SAMSUNG GALAXY GEAR.

According to preferred embodiments of the current invention, the travel seller screen and the travel client screen are interconnected to the travel database system through a computer network.

According to preferred embodiments of the current invention the travel database system comprises a global distribution system (GDS) and/or a computer reservation system (CRS).

According to preferred embodiments of the current invention, in addition to information from the travel database system also other sources can be visualized on the travel client screen, such as for example from websites available on the internet, for example websites such as, but certainly not limited to, for example travel websites such as for example the TRIPADVISOR travel website and/or other websites such as for example photo sharing websites such as for example the FLICKR photo sharing website, etc..

According to preferred embodiments of the current invention, the screen visualization module comprises a template module for formatting the client travel information. Such configuration has been found to allow the client travel information to be formatted according to predetermined templates making the travel information even more understandable for the travel client. According to preferred embodiments of the current invention, the template to be used by the template module for formatting the client travel information can be selected by the travel seller through the travel seller selection interface module.

According to preferred embodiments of the current invention, the screen visualization module is provided to visualize the selected client travel information from the travel database system onto the travel client screen based on client profile information so that the selected client travel information can be formatted in a way which is more in correspondence with the expectation of the travel client, for example the screen visualization module can be provided to translate words known to travel agents but usually unknown to travel client to words which are more widely known to travel clients.

According to more preferred embodiments of the current invention, the screen visualization module for example is provided to visualize the selected client travel information based on client profile information inputted, for example inputted by either the travel seller and/or the travel client, and/or even on information from the travel database system, for example information present in the travel database system on the travel client, such as for example travel services for which a booking request is available, for example from previous travels from the travel client or for travel services which are not yet completed and are, for example, still subject to change. The client profile information can for example be retrieved from a travel client profile database and/or can comprise the selected client travel information, travel client characteristics such as for example the type of client, for example a client looking for, or even booking, a private leisure travel or a client looking for, or even booking, a business travel, preferred language (for example indicated by the travel client itself and/or if applicable by browser settings, IP address (by deduction from location related to the IP address and ultimately language related to that location), etc.), nationality (for example indicating a preferred language), possible disabilities (allowing for example that the travel service is adapted to the disability of the travel client and/or that the way the selected client travel information is presented is adapted to the disability, for example when a travel client is blind, then the selected client travel information will not only be shown on the travel client screen but could also be read out aloud by speech synthesis software, when a travel client has a visual disability, then the selected client travel information could for example be shown on the travel client screen in a larger size and/or could also be read out aloud by speech synthesis software, etc.), presence of children during the travel (for example indicating that the travel is not a business travel and for example indicated by the request of travel information for at least one child), etc., the travel seller, changes in function of time, for example taking into account the season when the information is requested, etc.

According to more preferred embodiments, more in particular the template module is provided, based on inputted client profile information, to visualize the selected client travel information, by selecting a template and then applying it or suggesting it first for application to the travel seller, for example through the travel seller selection interface module.

According to more preferred embodiments of the current invention, the user interface provided by the screen visualization module has a responsive design, more preferably the screen visualization module is provided to receive information on the travel client screen, for example resolution of the travel client screen, and is provided to format the client travel information in function of the information on the travel client screen, for example formatting the client travel information taking into account the resolution of the travel client screen, the number of supported colors by the travel client screen, transparency possiblities made possible by the travel client screen, etc. It has been found that such a screen visualization module allows an improved visualization of the client travel information on the travel client screen.

The invention also relates to a software product provided for performing the method according to the current invention.

The invention also relates to a data carrier comprising the software product according to the current invention.

Other details and advantages of the computer implemented gateway according to the invention will become apparent from the enclosed figures and description of preferred embodiments of the invention.
Figure 1 - 3 show schematic overviews of the system according to the invention.
Figure 4a shows an embodiment of travel information shown on the travel seller screen.
Figure 4b shows a different embodiment of travel information shown on the travel seller screen.
Figure 5 shows a different embodiment of figure 4.
Figure 6 shows an embodiment of client travel information on the travel client screen.
Figure 7 shows a different embodiment of figure 6.
Figures 8 - 10 show different embodiments illustrating the method according to the present invention.
Figure 11a shows an overview of the travel seller screen and figure 11b of the travel client screen.
Figure 12a shows an overview of the travel seller screen and figure 12b of the travel client screen.

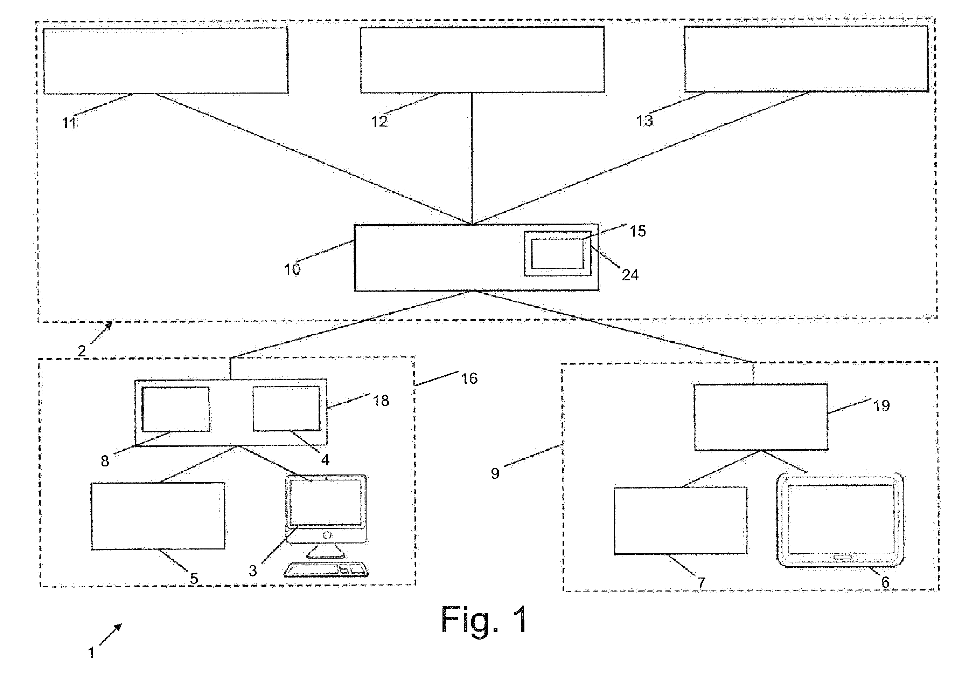

The schematic overview of the computer system 1 according to the invention shown in figure 1, shows that the computer system 1 for selling travel services by a travel seller to a travel client, comprises a travel database system 2 comprising travel information.

The travel seller can be any one of travel agent, a travel management company (TMC), a travel company, for example an airline, a train operating company, a bus operating company, a boat operating company, etc.

The travel database system 2 shown in figure 1 comprises a global distribution system (GDS) 10 and at least one, more in particular three although more or less are also possible such as for example one, two, four, five, six, seven, eight, nine, ten, etc., computer reservation system (CRS) 11, 12, 13. Such a configuration is however not critical for the current invention and the travel database system 2 could also comprise only one of the GDS 10 and the at least one CRS 11, 12, 13, for example only at least one CRS or for example only one GDS. Although figure 1 shows multiple CRSs 11, 12, 13 and only a single GDS 10, this is not critical for the invention and the travel database system 2 could also comprise less or even more CRSs and/or more than one GDS, according to the desired configuration of the computer system 1. Moreover, the presence of the GDS 10 or the at least one CRS 11, 12, 13 is not critical for the invention and can be omitted altogether to be replaced by, for example, a specific other database configuration. However, as GDSs and CRSs are often used in travel industry, often such components form part of the travel database system 2.

As well-known by the person skilled in the art, the several components of the travel database system 2, here the CRSs 11, 12, 13 and the GDS 10, do not need to be physically at the same location or even near each other. These components 10, 11, 12, 13 are, as well-known by the person skilled in the art, often connected through a network, for example an intranet and/or an internet.

Figure 1 further shows that the computer system 1 further comprises a travel seller screen 3, here schematically shown in a usual configuration, for showing travel information from the travel database system 2 to the travel seller and a screen visualization module 4 for visualizing travel information from the travel database system 2 onto the travel seller screen 3.

Figure 1 shows that the travel seller screen 3 is part of a travel seller computer 16. The travel seller computer 16 shown in figure 1 further comprises a controller 18 and a travel seller selection interface module 5.

The seller computer 16 can be any type of computer known to the person skilled in the art, for example a server system, a workstation, a desktop computer, a laptop computer, a tablet computer, etc.

The travel seller selection interface module 5 can be any known type of interface module 5 compatible in the computer, comprising for example a keyboard interface and/or mouse interface and/or a touch interface, for example a touch interface overlaying the seller screen 3 forming a touch screen interface of for example a tablet computer, etc. The travel seller selection interface module 5 can further comprise any known type of user interface such as for example a command line interface (CLI) or a graphical user interface (GUI).

The controller 18 can be any type of controller 18 known to the person skilled in the art and deemed appropriate by the person skilled in the art such as for example a central processing unit (CPU).

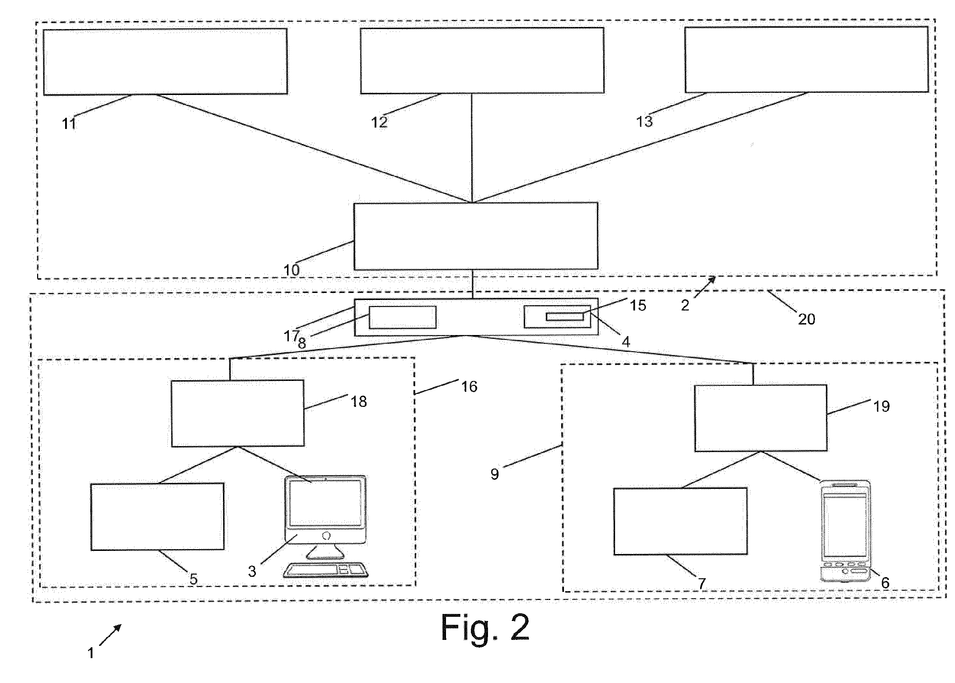

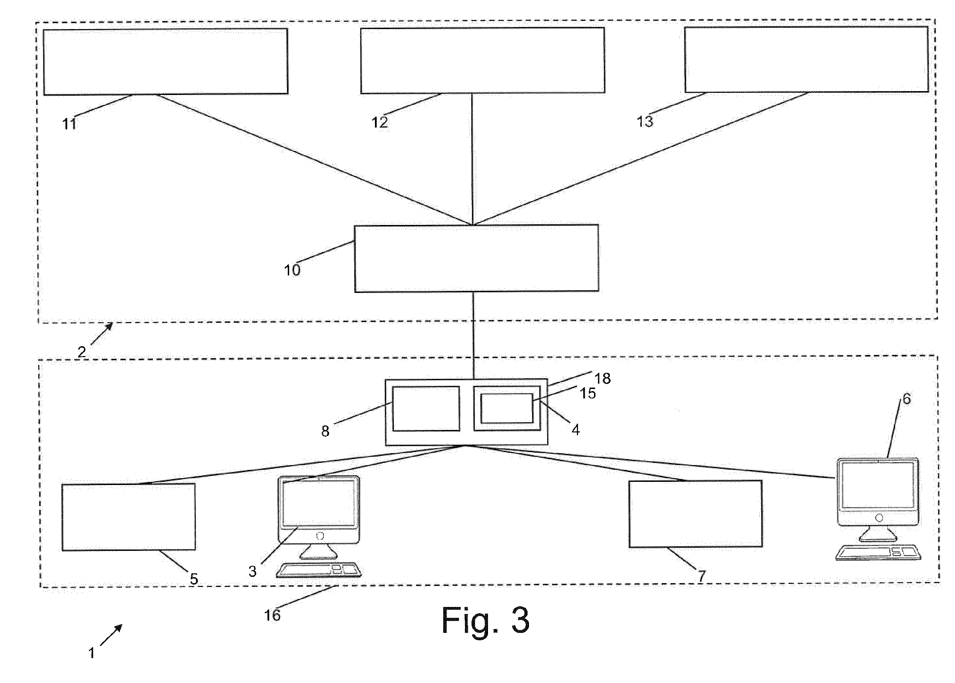

The seller computer 16 may comprise the visualization module 4, more in particular the controller 18 can comprise the visualization module 4, as shown in figure 1. However, as shown in figures 2 and 3, the visualization module 4 can also be comprised by other components of the computer system 1 as will be explained later on.

The travel seller selection interface module 5 allows the travel seller to select client travel information from the travel database system 2. Thereto, the travel seller selection interface module 5 is connected to the travel database system 2. Figure 1 shows that the travel seller computer 16 comprising the travel seller selection interface module 5 is connected to the travel database system 2 through the controller 18. Although any type of interconnection can be used hereto, the connection for example is a network connection, more in particular an internet connection although an intranet connection also would be possible.

Figure 1 shows that particularly, the seller computer 16, through the controller 18, is connected to the GDS 10 of the travel database 2. This however depends on the type of travel database system 2 and, of course, the presence of a GDS 10 in the travel database system 2.

The computer system 1 shown in figure 1 further comprises a travel client screen 6, here by way of example schematically shown in a tablet computer configuration, different from the travel seller screen 3 for showing travel information from the travel database system 2 to the travel client.

Figure 1 shows that the travel client screen 6 is part of a travel client computer 9. The travel client computer 9 shown in figure 1 further comprises a controller 19 and a travel client selection interface module 7.

The client computer 9 can be any type of computer known to the person skilled in the art, for example a server system, a workstation, a desktop computer, a laptop computer, a tablet computer, a smartphone, or a wearable computer, such as for example a smart watch or connected glasses, etc. Preferably, the client computer 9 is a tablet computer.

The travel client selection interface module 7 can be any known type of interface module 7 compatible in the client computer 9 comprising for example a keyboard interface and/or mouse interface and/or a touch interface and/or a gesture based interface and/or a voice controlled interface, for example a touch interface overlaying the client screen 6 forming a touch screen interface of for example a tablet computer, or a touchpad located on a wearable device enabling the user to make a selection, etc. The travel client selection interface module 7 can further comprise any known type of user interface such as for example a command line interface (CLI) or a graphical user interface (GUI). However, the client selection interface module 7 is not critical for the invention and can be omitted, although no particular example is shown in the figures. For example, the client selection interface module 7 can be omitted when it is intended to only visualize the selected client travel information from the travel database system 2 onto the travel client screen 6, without offering the possibility to the client to interact with the travel information visualized on the client screen 6.

The controller 19 can be any type of controller 19 known to the person skilled in the art and deemed appropriate by the person skilled in the art such as for example a central processing unit (CPU).

As shown in figure 1, a further visualization module 24 is present in the computer system 1, more in particular as part of the travel database system 2, further in particular as part of the GDS 10. Such configuration is however not critical for the invention as will be explained later on.

The screen visualization module 24 is provided to visualize the selected client travel information from the travel database system 2 onto the travel client screen 6. Thereto, the travel client screen 6, and thus preferably also the controller 19 and more preferably thus also the travel client computer 9 and, if present, the travel client selection interface module 7, is connected to the travel database system 2, and if the screen visualization module 24 is part of the travel database system 2, therefore also to the screen visualization module 24. Figure 1 shows that the travel client screen 6 is connected to the travel database system 2 through the controller 19, thus also connecting the travel client computer 9 to the travel database system 2. Although any type of interconnection can be used hereto, the connection for example is a network connection, more in particular an internet connection although an intranet connection also would be possible.

The travel client selection interface module 7, if present as shown in figure 1, allows the client to interact with the travel information visualized on the client screen 6. Thereto, the travel client selection interface module 7 also is connected to the travel database system 2. Figure 1 shows that the travel client computer 9 comprising the travel client selection interface module 7 is connected to the travel database system 2 through the controller 18. Although any type of interconnection can be used hereto, the connection for example is a network connection, more in particular an internet connection although an intranet connection also would be possible.

The travel client selection interface module 7 for example allows the travel client to select further client travel information from the travel database system 2. More in particular the travel client selection interface module 7 allows the travel client to select further client travel information from the selected client travel information, selected by for example the travel seller, visualized on the travel client screen 6. Furthermore, the screen visualization module 4, 24 is provided to visualize the selected further client travel information from the travel database system 2.

The travel client selection interface module 7 may also or in stead allow the travel client to select a travel service represented by the client travel information from the travel database system 2, preferably from the selected client travel information, selected by for example the travel seller, visualized on the travel client screen 6. In response to the selection the travel client selection interface module 7 can be provided to transmit the selected travel service to a booking module 8 of the computer system 1, allowing the travel seller to book the selected travel service. The booking module 8 is for example provided to interact with the GDS 10 for booking for example a travel service either selected by the travel seller on his or her travel seller computer 16 or by the travel client on his or her client computer 9.

Figure 1 shows that the booking module 8 is part of the seller computer 16. Such an embodiment is however not critical for the invention as will be explained later on.

Figure 1 shows that particularly, the client computer 9, through the controller 19, is connected to the GDS 10 of the travel database 2. This however depends on the type of travel database system 2 and, of course, the presence of a GDS 10 in the travel database system 2.

The visualization module 24 as shown in figure 1 comprises a template module 15 for formatting the client travel information. For example, depending on the travel seller and/or the travel client, the travel information may be formatted differently. For example, the template may take into account the type of travel seller and/or client, changes in function of time, for example taking into account the season when the information is requested, etc.

The visualization module 4, although not shown by the figure 1, can also comprise template modules 15 for formatting travel information onto the travel seller screen 3. For example, depending on the travel seller and/or the travel client the travel information may be formatted differently. For example, the template may take into account the type of travel seller and/or client, changes in function of time, for example taking into account the season when the information is requested, etc.

The at least one visualization module 4, 24 of the computer system 1 for visualizing travel information either on the travel seller screen 3 and/or the travel client screen 6 may interact with the respective screens 3, 6 in different ways depending on, for example, the desired configuration and more in particular, for example, the location of the visualization module 4, 24. For example, when the visualization module 4 is, as shown in figure 1, present in the controller 18 of the seller computer 1, the visualization module 4 can for example substantially directly control the output on the seller screen 3 based on the information received from the travel database system 2. When, for example, the visualization module 24 is, as shown in figure 1, remote with respect to the travel seller computer 16 and the travel client computer 9, for example as shown in figure 1 present in, for example the travel database system 2, the visualization module 24 preferably communicates with the screen, in this case the travel client screen 6, on a higher lever. For example the visualization module 24 might generate hypertext markup language (HTML), if present in concordance with the templates of the template module 15, which is then received and visualized by the client computer 9 onto the travel client screen 6, for example by an application installed on the client computer 9, for example a browser application, such as for example INTERNET EXPLORER, SAFARI, OPERA, CHROME, FIREFOX, etc.

The computer system 1 shown in figure 2 differs from the computer system 1 shown in figure 1, for example in that the travel seller computer 16 and the travel client computer 9, of which the screen is now by way of example schematically shown in a smart phone configuration, are not directly connected to the travel database system 2 as discussed above, but are instead connected to an intermediate computer 17. The intermediate computer 17 could for example be located at the premises of the travel seller, here schematically presented as a dotted lined box 20, forming for example a server, more in particular for example a NAT server connected to the travel seller computer 16 and the client computer 9 over an intranet. However, the intermediate computer could also be located further away and could be connected to the travel seller computer 16 and the client computer 9 over the internet.

A further difference with figure 1 is that in figure 2, the at least one visualization module 4, 24 is not part of the travel seller computer 16 nor of the travel client computer 9. Instead, the at least one visualization module 4, 24 is part of the intermediate computer 17. In such configuration the visualization module 4, 24 is remote with respect to the travel seller computer 16 and the travel client computer 9. Although not shown in the figures, the at least one visualization module 4 can also be located on further different locations such as for example the travel database system 2, the travel seller computer 16, etc.

A further difference with figure 2 is that in figure 1 at least two visualization modules 4, 24 are shown, a first visualization module 4 being provided to visualize the travel information from the travel database system 2 onto the travel seller screen 3 and at least a second visualization module 24 being provided to visualize the selected client travel information from the travel database system 2 onto the travel client screen 6. Figure 2 instead shows that only a single visualization module 4 may be sufficient to both visualize the selected client travel information from the travel database system 2 onto the travel client screen 6 and to visualize travel information from the travel database system 2 onto the travel seller screen 3. This single visualization module 4 can then for example be located on the intermediate computer 17, as shown in figure 2, or can for example be located in the travel database system 2, as shown in figure 1, or could even for example be located on the travel seller computer 16, all depending on the desired configuration of the computer system 1.

When a multiple of visualization modules 4, 24 are used in the computer system 1, their respective location can be chosen as outlined above, depending on the desired configuration of the computer system 1. For example, the first visualization module 4 being provided to visualize the travel information from the travel database system 2 onto the travel seller screen 3 can be located on the travel seller computer 16, the intermediate computer 17 or the travel database system 2 whereas the second visualization module 24 being provided to visualize the selected client travel information from the travel database system 2 onto the travel client screen 6 can be located on the travel client computer 9, the intermediate computer 17 or the travel database system 2. When both the first and the at least one second visualization module 4, 24 are on the same location, for example on the travel seller computer 16, the intermediate computer 17 or the travel database system 2, for example the GDS 10, depending on the desired configuration of the computer system 1 it could be decided to combine them into a single module 4, as for example shown in figure 2.

A further difference between figure 1 and figure 2 is that in figure 2 the booking module 8 is not located on the travel seller computer 16, as shown in figure 1, but instead is located on an intermediate computer 17, more in particular the same intermediate computer 17 on which the visualization module 4 is located. Furthermore, the booking module 8 can also be located on, for example, the travel database system 2, depending on the desired configuration of the computer system 1.

It is noted that in the embodiments shown in figure 1 and figure 2, the travel seller and the travel client do no longer need to be physically close to each other. Indeed, the travel seller and the travel client can for example communicate by voice over the telephone while the travel seller can show certain travel information at the same time on the travel client computer 9 using his or her own travel seller computer 16. Such an embodiment in other words would allow that the travel client no longer has to move to the location of the travel agent to obtain the desired travel information.

Figure 3, as further different embodiment of the computer system 1 according to the present invention, shows instead that the travel seller screen 3, the travel client screen 6, the travel seller selection interface module 5 and the travel client interface module 7 are interconnected to a single controller 18 thus forming a single computer 16. Although the travel client interface module 7 is shown, this is, as explained above, not critical for the invention and the travel client interface module 7 can be omitted. For example, an existing travel seller computer could be adapted such as to become part of the computer system 1 according to the present invention by providing it with an additional screen 6 and the appropriate visualization module 4 on its controller 18.

Furthermore, although not shown in figure 3, the visualization module 4 as shown in figure 3, could be located on a different location such as for example the travel database system 2, for example on the GDS 10.

Furthermore, the booking module 8, if present, as shown in figure 3, could be located on a different location such as for example the travel database system 2, for example on the GDS 10.

Although the configuration of figure 3 requires that the travel client is at the location of the travel seller, the configuration allows to provide the benefits of the computer system of the current invention 1 to the travel agent, without requiring a lot of changes to the existing computers of the travel agent, as described above.

By way of an example, hereunder different steps of the method are exemplified.

To allow the travel seller to share content on the travel client screen, the travel client screen 6 is connected to a computer system. Thereto, a session is set up between the computer system and the travel client screen 6. The session can be triggered by for example an action of the travel seller, for example by clicking on a button from his selling interface which starts an information sharing session with a travel client screen 6 physically connected to his own computer, or by the travel client, for example by clicking on a specific URL, scanning a Quick Response (QR) code which launches a specific website to interact with the travel client screen, etc. However, the way the session between the computer system and the travel client screen is set up is not critical for the invention and can be further determined by the person skilled in the art.

In a first step, the travel seller screen 3 of the computer system 1 shows travel information from the travel database system 2 of the computer system 1 visualized by the screen visualization module 4, 24 of the computer system 1 to the travel seller. The travel information shown on the travel seller screen can for example be selected by the travel seller from the travel information database 2, for example based on information received from the travel client, for example based on the type of travel desired by the travel client and communicated by the travel client to the travel seller.

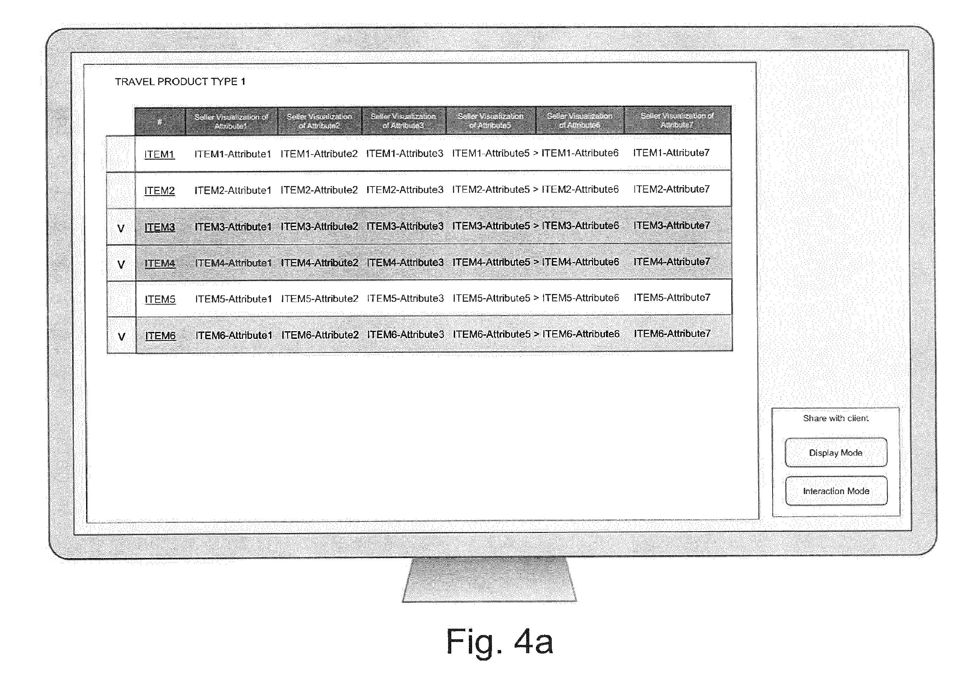

Figure 4a for example shows an embodiment of travel information shown on the travel seller screen. In the example six items are visualized, each with three related attributes. Of course, more or less items are possible and more or less related attributes are possible. Also, the way of visualizing can be different depending on the desired configuration.

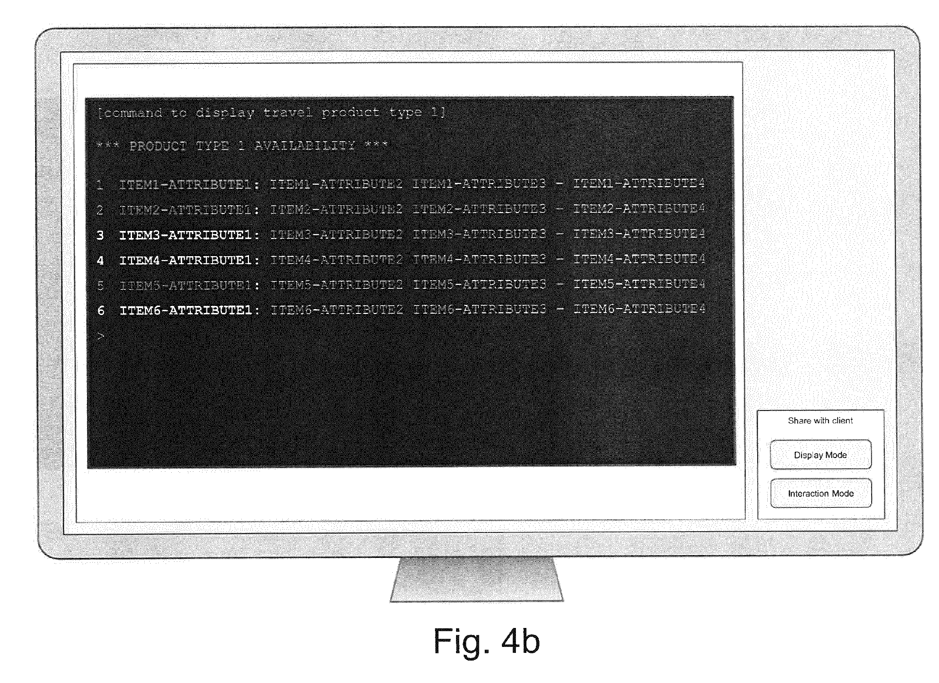

The travel information visualized by the visualization module 4, 24 of the computer system 1 preferably is adapted to the needs of the travel seller. For example, the travel information can be displayed in very cryptic way, as for example shown in figure 4b, allowing for example much information to be shown on the travel seller screen 3.

Then, the travel seller selects client travel information from the travel database system 2 of the computer system 1, thus making a subset of the travel information, preferably from the travel information shown to the travel seller on his travel seller screen 3, through a travel seller selection interface module 5 of the computer system 1.

Selection of the client travel information from the travel database system 2 is for example shown in figure 4a. As shown in figure 4a, each of the items is for example visualized with a check-box which can be checked or can be left unchecked or can be unchecked after checking by the travel seller. Of course, any way of selecting the client travel information is possible and the use of a check-box is not critical for the invention. For example the selected information can be highlighted, moved to a different location on the travel seller screen, etc.

After that selection, the screen visualization module 4, 24 visualizes the selected client travel information from the travel database system 2 onto a travel client screen 6 separate from the travel seller screen 3.

As shown on figure 4a, the visualization on the travel seller screen 3 can comprise further possibilities for visualizing the selected client travel information from the travel database system 2 onto the travel client screen 6. For example, figure 4a shows several buttons, allowing the travel seller for example to decide when to share the client travel information with the travel client by clicking button, the button being indicated with "Display Mode".

Although not shown in the figures, the travel seller selection interface module 5 can be provided to enable or disable the client selection module of the travel client selection interface module and thereto for example provides a button to the travel seller. For example, the travel seller could first show some travel information to the travel client and could then continue with allowing the travel client to make a selection out of certain options proposed to the travel client. Figure 4a for example shows that travel seller selection interface module 5 provides a button, for example indicated with "Interaction Mode", allowing such functionality.

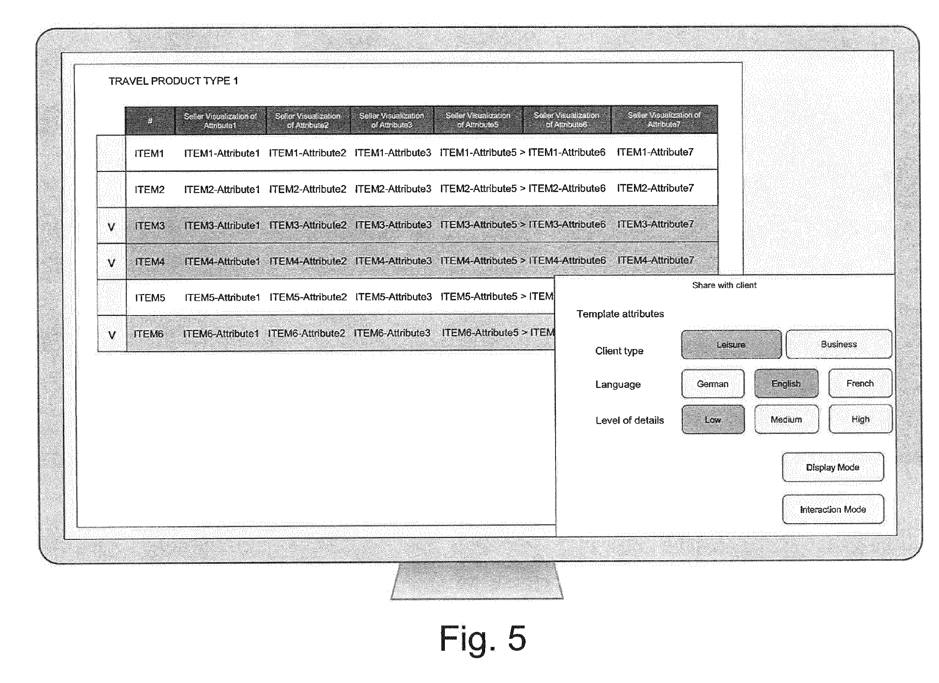

As discussed above, the template module 15 for formatting the client travel information can be adapted to, depending on the travel seller and/or the travel client, format the travel information differently. Figure 5 thereto for example shows that the travel seller can input certain template parameters determining which client travel information and how the client travel information can be visualized. If the screen visualization module is provided to visualize the selected client travel information based on client profile information inputted, as discussed above, then even certain template parameters can be suggested to the travel seller based on the client profile information inputted. To allow inputting template parameters, the template module is adapted to receive the parameters and to format the client travel information according to the template parameters received. For example figure 5 shows three template parameters, although more or less template parameters are possible: client type: for example leisure or business, leisure indicating that a leisure travel is being planned while business indicates that a business travel is being planned, although more or less options are possible; language: English, indicating that the client travel information will be in English, German, indicating that the client travel information will be in German, or French, indicating that the client travel information will be in French although more or less options are possible and/or other languages can be provided; Details: high, medium or low, a high level of detail indicating that the created subset of client travel information will be larger than when a subset is created with a low level of detail, although more or less options are possible.

The client travel information visualized by the visualization module 4, 24 of the computer system 1 onto the travel client screen 6 preferably is adapted to the needs of the travel client. For example, the travel information usually will be displayed taking into account the commercial nature of the client travel information displayed, for example the client travel information will include photos, videos, etc.

For example, the travel client would have a request, for example the travel client could be interested in a certain destination, but would still be uncertain on how, when, etc. to get to that destination. The travel seller would then search in the travel database system 2 for possibilities to comply with the request of the travel client. Based on the search, travel information will be selected from the travel database system 2 and displayed on the travel seller screen 3, visualized by the screen visualization module 4. The travel seller would then, for example, in a next step select from the visualized travel information, client travel information from the travel database system 2 for showing the client travel information from the travel database system 2 to the travel client on the travel client screen 6 visualized by the visualization module 4, 24.

The travel client can then look at the visualized client travel information and, for example, already make a decision by informing the travel seller, for example by communicating with him orally, for example during a face-to-face meeting, a telephone conversation, etc. or any other way, for example by text, for example by chatting, etc.

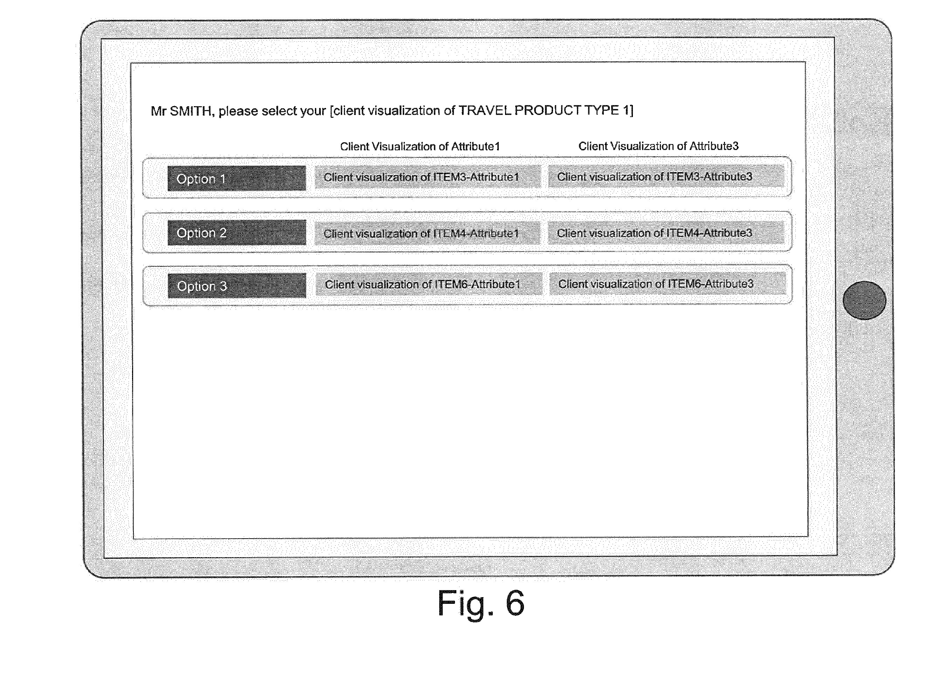

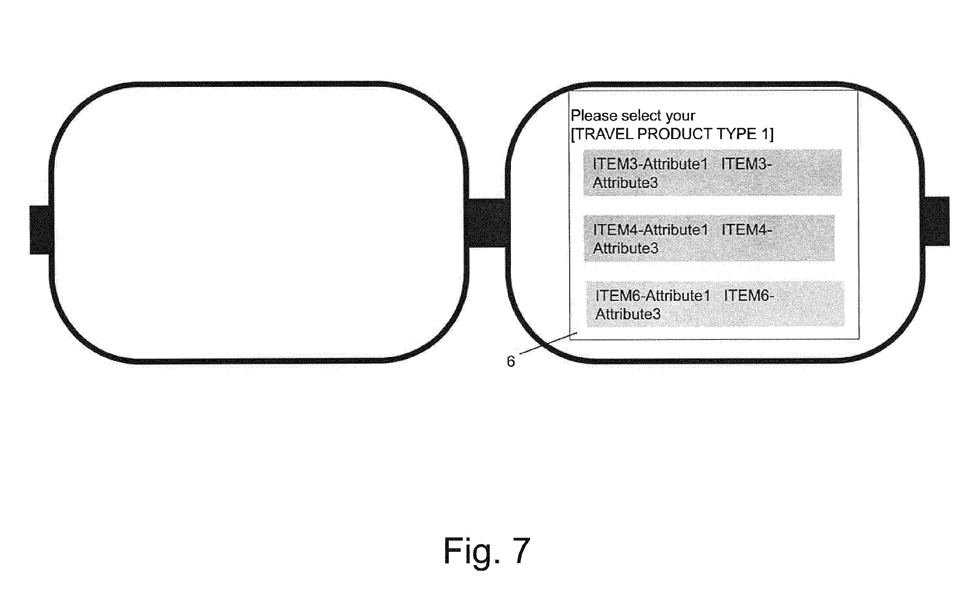

Figure 6 shows an example of visualized client travel information, for example visualized on a tablet, based on the selection by the travel seller as shown in figure 4a. Figure 7 shows a different embodiment in which an example is shown wherein client travel information is visualized on connected glasses, based on the selection by the travel seller as shown in figure 4a.

The decision could also be made by the travel client selecting a travel service represented by the client travel information from the travel database system 2 through the travel client selection interface module 7, if present. The travel client selection interface module 7 then for example transmits the selected travel service to a booking module 8 of the computer system 1, for booking of the selected travel service by the travel seller.

For example, the client would be presented with the several options for reaching the requested destination on the travel client screen 6 and would then make a selection of one of the presented options, for example by clicking on, touching, etc. the desired option.

Figure 6 for example also requests the travel client to make a selection out of the options presented to him. The travel client, in this case Mr. Smith, can then select the desired option, for example by clicking, tapping or otherwise selecting the option desired by him.

However, before booking the travel client can also select further client travel information from the travel database system 2 through the travel client selection interface module 7, for example before making a decision. The screen visualization module 4, 24 would then visualize the selected further client travel information from the travel database system 2.

For example, when the travel client is presented with the several options for reaching the requested destination on the travel client screen 6, the travel client could request further client travel information from the travel database system 2, for example by clinking on, touching, etc. the option for which more client travel information is desired, for example more specific information relating to waiting times, departure times, arrival times, etc.

The example given above of course is not limited to given example and can also be applied to a request relating to choosing a hotel, renting a car, etc. or even combination of one or more of those.

For example, to book a full travel a travel client may need any one or more of transportation, for example airplane, train, boat, etc., accommodation, for example hotel, and more transportation at destination, for example rental car, taxi, etc.

The travel seller will for example proceed with suggesting travel products sequentially, i.e. not at the same time. For example, the travel seller can start with the booking of the transportation, for example a flight. The travel seller will retrieve from the travel database system 2 several options for this travel service, for example several flights, for example flight 1, flight 2, flight 3, and may for example decide to share the full list of flights with the travel client or a subset of the options returned by the travel database system 2, for example flight 1 and flight 3. Using the computer system 1 according to the present invention, the travel seller can share the desired client travel information with the travel client. This information could then be shared for information only or for selection by the travel client as discussed above.

In a subsequent step, the travel seller can then proceed with retrieving from the travel database system 2 several options for accommodation, for example several hotels, for example hotel 1, hotel 2, hotel 3, and may for example decide to share the full list of hotels with the travel client or a subset of the options returned by the travel database system 2, for example hotel 1 and hotel 3. Using the computer system 1 according to the present invention, the travel seller can share the desired client travel information with the travel client. This information could then be shared for information only or for selection by the travel client as discussed above.

In a following step, the travel seller can then proceed with retrieving from the travel database system 2 several options for transportation at destination, for example several rental cars, for example car 1, car 2, car 3, and may for example decide to share the full list of cars with the travel client or a subset of the options returned by the travel database system 2, for example car 1 and car 3. Using the computer system 1 according to the present invention, the travel seller can share the desired client travel information with the travel client. This information could then be shared for information only or for selection by the travel client as discussed above.

In a final step the selected transportation, accommodation and transportation at destination, for example collected in a shopping box, can then be shown to the travel client for approval and then after approval can be further treated by the booking module for finally booking the travel.

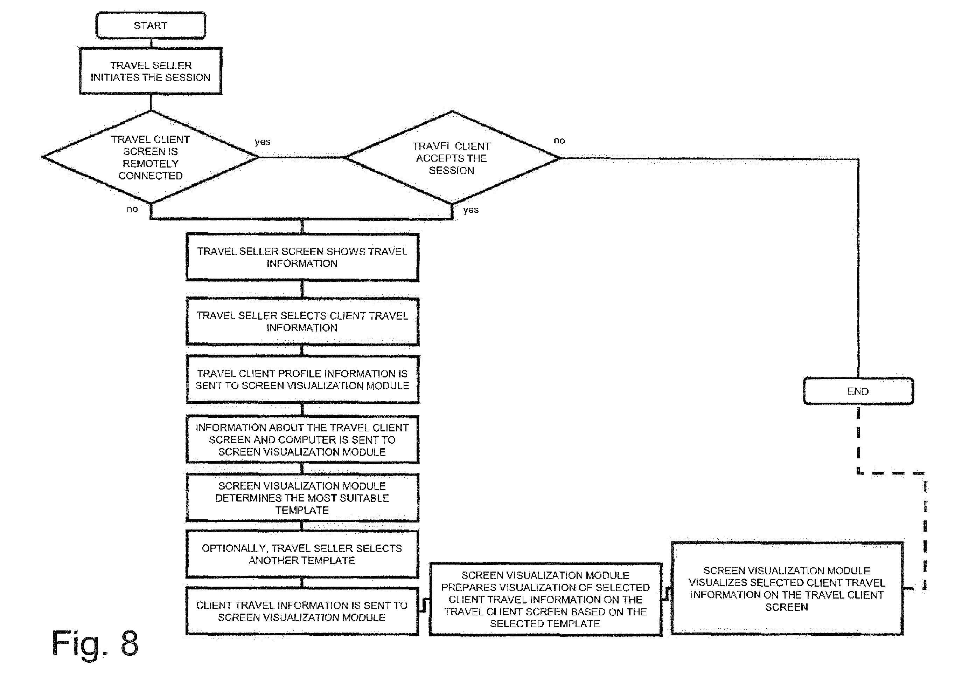

More specifically figure 8 shows a flowchart illustrating an embodiment of the invention in which a travel seller initiates a session with a travel client. It can be seen that in case the travel client screen 6 is not yet connected to the computer system of the travel seller, a request is sent to the travel client, for example the travel client screen 6, the travel screen 6 being interconnected remotely with the travel client screen 6 after acceptance of the request by the travel client, the session otherwise ending as indicated.

Figure 8 further shows that the screen visualization module 4, 24 is provided to receive information on the travel client screen, for example resolution of the travel client screen, and is provided to format the client travel information in function of the information on the travel client screen, for example formatting the client travel information taking into account the resolution of the travel client screen.

Further figure 8 shows further steps such as: the travel seller screen 3 showing travel information, the travel seller selecting client travel information and a desired template, for example based on a most suitable template determined by the screen visualization module, after which the selected client travel information is sent to the screen visualization module. Furthermore, figure 8 shows the step of providing the screen visualization module with travel client profile information for an improved visualization of the selected client travel information. As a last step the screen visualization module prepares and ultimately also shows the selected client travel information on the travel client screen 6. Further, indicated by the dotted line in figure 8, this could be the end of the process or, as described above, part of the process could be repeated to show further, possibly different selected client travel information. As is clear from the description above, the shown flowchart is merely an illustration and the flowchart could comprise less or more steps or the steps shown could even be in a different order.

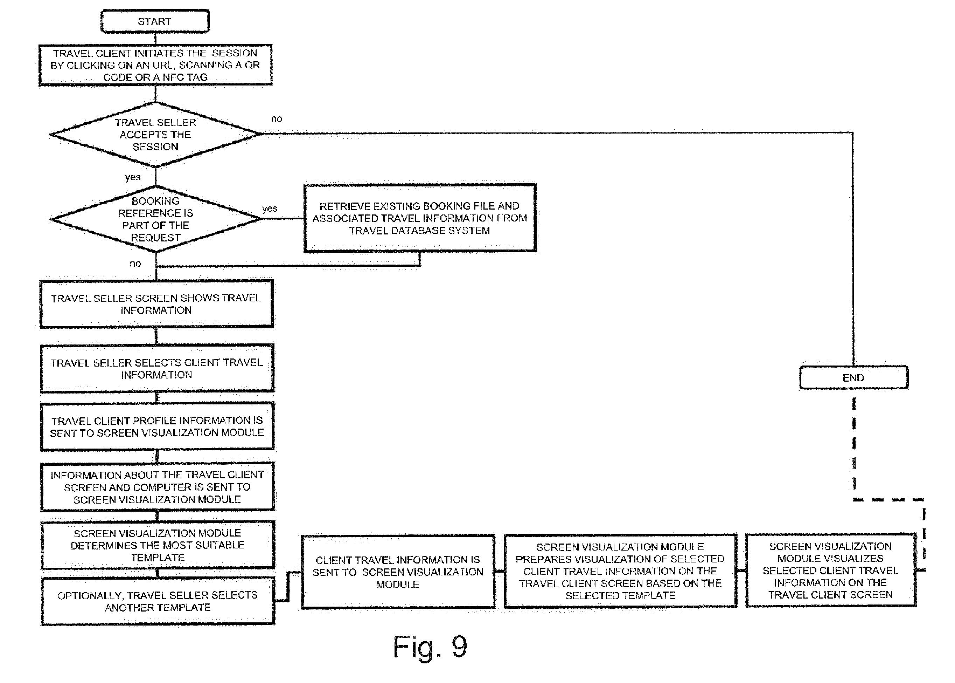

Figure 9 shows a flow chart of a different embodiment wherein a travel client initiates a session with a travel seller. As can be seen here, the travel client initiates the session and sends a request to the travel seller to initiate a remote connection of the travel client screen 6 and the computer system of the travel seller. Figure 9 also shows the option of providing a booking reference to the travel seller so that an existing booking file can be retrieved from, for example, the travel database system 2 so that, for example, a previously created file can be finished or altered. Although not shown in figure 8, such a request can also be part of a session initiated by the travel seller.

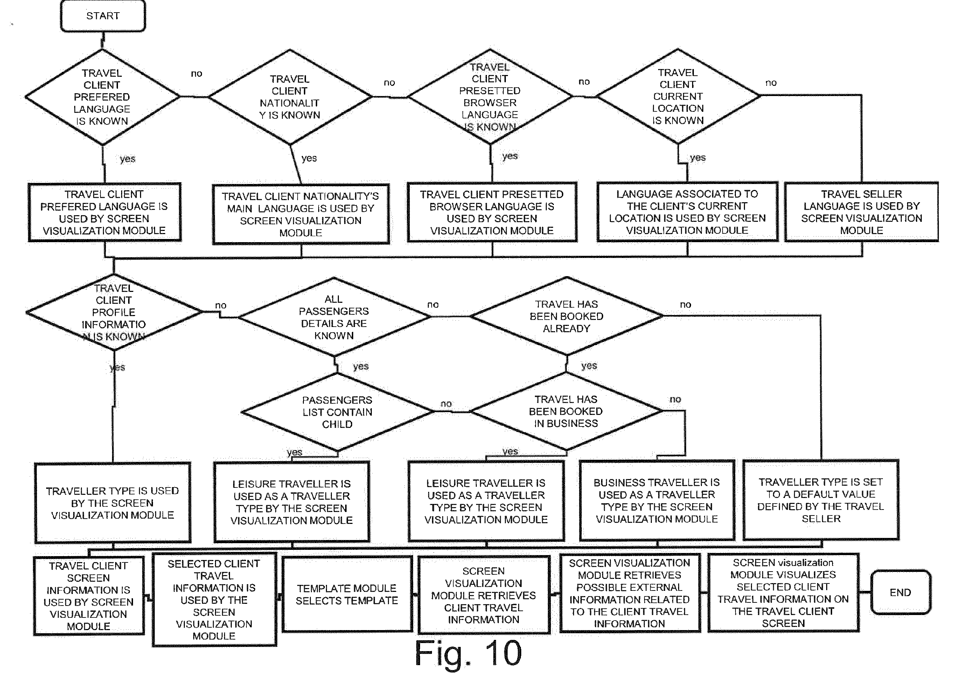

Figure 10 shows a flowchart of a preferred embodiment of the screen visualization module 4, 24, especially in relation with the client profile information, more in particular with respect to the language desired by the travel client and whether it is leisure travel or a business travel.

It can be seen that first the desired language of the travel client is determined, either by knowing the preferred language of the travel client, for example from a previous travel or for example from a travel client profile database, the nationality of the travel client, the language settings of the travel client's browser, if the travel client is connected to the travel seller's computer by browser, or the current location of the travel client, for example determined by analysis of the IP address of the travel client and/or by knowing the travel client's location, for example when the travel client is present with the travel seller in the travel seller's office.

Further it can be seen that further the type of travel is determined, either by knowing the type of travel, for example from a previous travel, or by analyzing the details of the passengers of the travel being discussed by the travel client. For example, if children are present among the passengers, it could be argued that the travel is a leisure travel. When the travel has already previously been booked, the type of travel can be determined based on the details of the booked travel, as indeed shown.

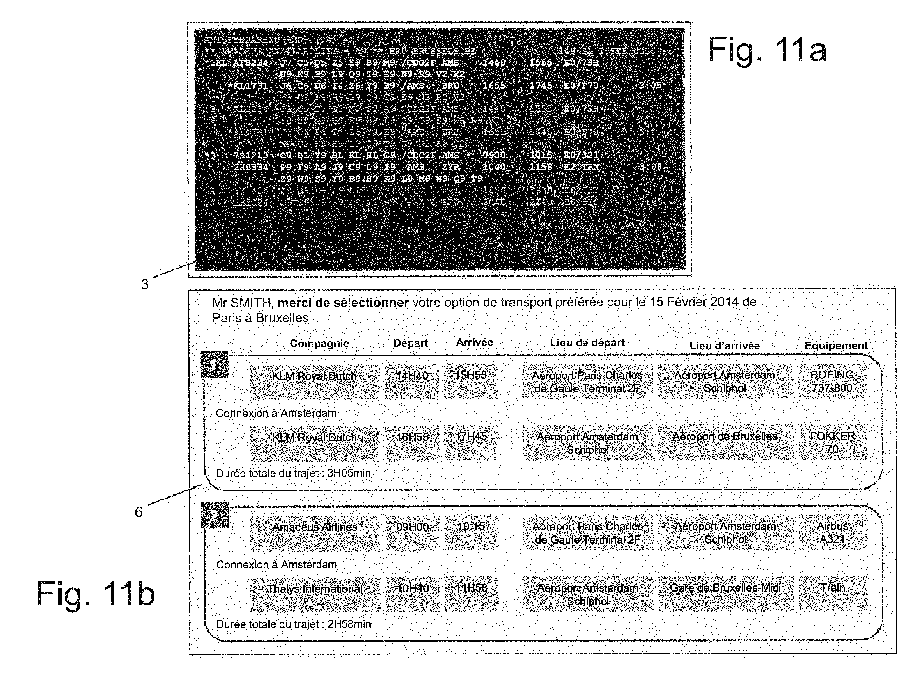

Figure 11a shows an overview of an example of the travel seller screen in use and figure 11b shows an overview of the travel client screen while in use, showing client travel information selected by the travel seller based on the information seen on figure 11a. It can be observed that the travel information is specifically being formatted to suit the needs of the travel client.

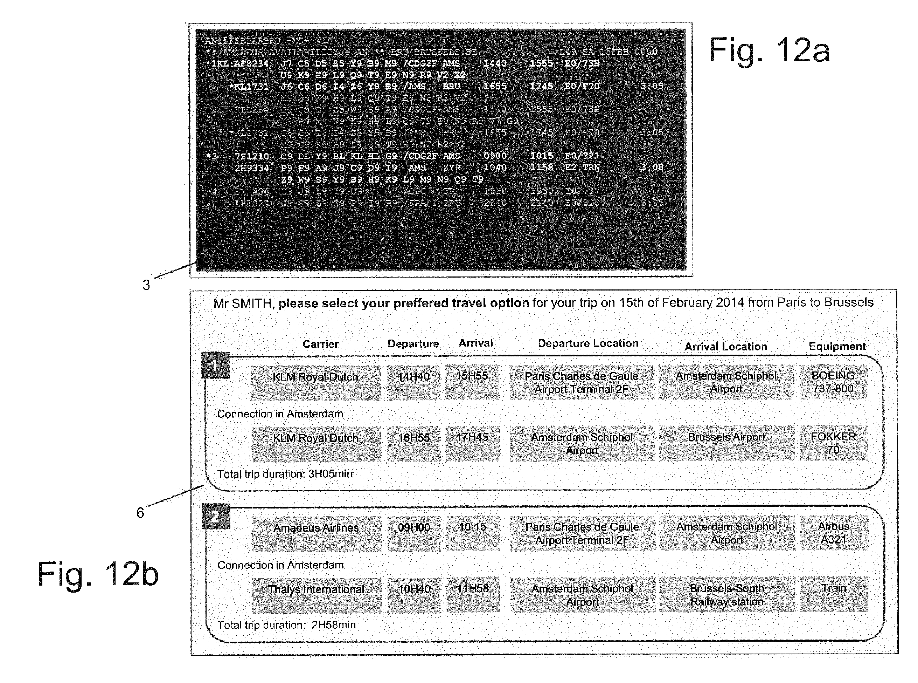

Figure 12a shows an overview of an example of the travel seller screen in use and figure 12b shows an overview of the travel client screen while in use, showing client travel information selected by the travel seller based on the information seen on figure 12a. It can be observed that the travel information is specifically being formatted to suit the needs of the another specific travel client, preferring the use of English in stead as French.

It can be observed for example that although the travel seller screen 3 shows much of the information shown in the travel client screen, the client travel information has been formatted by the screen visualization module to suit the needs of a travel client. For example, the cryptic carrier code and IATA (International Air Transport Association) code indicating the airport station, has been visualized so that a typical travel client not being familiar with that typical language now can understand what is being mentioned, further taking into account the language requirements of the travel client. Further, for example the rather cryptic time and date has been formatted into a more familiar way for the average travel client.

It can also be seen that some information displayed on the travel seller screen is just left out by the visualization module as it is of no importance to the travel client.

## Claims

1. A computer system (1) for selling travel services by a travel seller to a travel client, comprising a travel database system (2) comprising travel information, a travel seller screen (3) for showing travel information from the travel database system (2) to the travel seller and a screen visualization module (4, 24) for visualizing travel information from the travel database system (2) onto the travel seller screen (3), **characterized in that** the computer system (1) further comprises a travel seller selection interface module (5) allowing the travel seller to select client travel information from the travel database system (2) and a travel client screen (6) different from the travel seller screen (3) for showing travel information from the travel database system (2) to the travel client **and in that** the screen visualization module (4, 24) is provided to visualize the selected client travel information from the travel database system (2) onto the travel client screen (6).

2. A computer system (1) according to claim 1, **wherein** the computer system (1) comprises a travel client selection interface module (7).

3. A computer system (1) according to claim 2, **wherein** the travel client selection interface module (7) allows the travel client to select further client travel information from the travel database system (2) and wherein the screen visualization module (4, 24) is provided to visualize the selected further client travel information from the travel database system (2).

4. A computer system (1) according to claim 2 or 3, **wherein** the travel client selection interface module (7) allows the travel client to select a travel service represented by the client travel information from the travel database system (2) and **wherein** the travel client selection interface module (7) is provided to transmit the selected travel service to a booking module (8) of the computer system (1), allowing the travel seller to book the selected travel service.

5. Method for selling travel services by a travel seller to a travel client, wherein a travel seller screen (3) of a computer system (1) shows travel information from a travel database system (2) of the computer system (1) visualized by a screen visualization module (4, 24) of the computer system (1) to a travel seller, **characterized in that** after selection of client travel information from the travel database system (2) of the computer system (1) by the travel seller through a travel seller selection interface module (5) of the computer system (1), the screen visualization module (4, 24) visualizes the selected client travel information from the travel database system (2) onto a travel client screen (6) separate from the travel seller screen (3).

6. Method according to claim 5, **wherein** the computer system (1) comprises a travel client selection interface module (7).

7. Method according to claim 6, **wherein** the travel client selects further client travel information from the travel database system (2) through the travel client selection interface module (7) and **wherein** the screen visualization module (4, 24) visualizes the selected further client travel information from the travel database system (2).

8. Method according to claim 6 or 7, **wherein** the travel client selects a travel service represented by the client travel information from the travel database system (2) through the travel client selection interface module (7) and **wherein** the travel client selection interface module (7) transmits the selected travel service to a booking module (8) of the computer system (1), for booking of the selected travel service by the travel seller.

9. Computer system (1) or method according to any one of the preceding claims, **wherein** the travel seller is any one of travel agent, a travel management company (TMC), a travel company, for example an airline, a train operating company, a bus operating company, a boat operating company, etc.

10. Computer system (1) or method according to any one of the preceding claims, **wherein** the travel client screen (6) is part of a travel client computer (9) and wherein the travel seller screen (3) is part of a different travel seller computer (16), both connected to the travel database system 2 through a computer network.

11. Computer system (1) or method according to any one of the preceding claims, **wherein** the travel seller screen (3) and the travel client screen (6) are interconnected to the travel database system (2) through a computer network.

12. Computer system (1) or method according to any one of the preceding claims, **wherein** the travel database system (2) comprises a global distribution system (GDS) (10) and/or a computer reservation system (CRS) (11, 12, 13).

13. Computer system (1) or method according to any one of the preceding claims, **wherein** the screen visualization module (4, 24) comprises a template module (15) for formatting the client travel information.

14. Software product for performing the method according to any one of the preceding claims.

15. Data carrier comprising a software product according to claim 14.
